# EUROPÄISCHE PATENTSCHRIFT

(11) **EP 2 823 998 B1**
(45) Veröffentlichungstag und Bekanntmachung des Hinweises auf die Patenterteilung: **27.12.2017**
(21) Anmeldenummer: 14002221.1
(22) Anmeldetag: 28.06.2014
(51) Int. Cl.: B60R 1/00

(54) **Kraftfahrzeug mit einem Bildschirm zur Darstellung eines mit einer Kamera aufgenommenen, das heckseitige Fahrzeugumfeld abbildenden Bildes**
Motor vehicle with a screen to display an image taken by a camera and corresponding to the periphery behind the vehicle
Véhicule automobile comprenant un écran affichant l'image prise par une caméra de la périphérie arrière du véhicule

(30) Priorität: 10.07.2013 DE 102013011574
(43) Veröffentlichungstag der Anmeldung: 14.01.2015
(73) Patentinhaber: AUDI AG, 85045 Ingolstadt (DE)
(72) Erfinder: Heinemann, Patrick, 85092 Kösching (DE); Prücklmeier, Andreas, 93083 Obertraubling (DE); Liepold, Markus, 85051 Ingolstadt (DE)
(74) Vertreter: Thielmann, Frank

(56) Entgegenhaltungen:
- DE-A1-102012 100 002
- JP-A- 2003 244 688
- US-A1- 2003 108 222

## Beschreibung

Die Erfindung betrifft ein Kraftfahrzeug, umfassend eine Anzeigevorrichtung zur Darstellung eines mit wenigstens einer kraftfahrzeugseitigen Bildaufnahmevorrichtung aufgenommenen, das heckseitige Fahrzeugumfeld abbildenden Bildes sowie eine die Anzeigevorrichtung steuernde Steuereinrichtung.

Kraftfahrzeuge mit entsprechenden Anzeigevorrichtungen respektive Steuereinrichtungen sind an und für sich bekannt. Bei derartigen Kraftfahrzeugen wird ein mit einer oder mehreren kraftfahrzeugseitigen Bildaufnahmevorrichtungen aufgenommenes, typischerweise das heckseitige Fahrzeugumfeld, insbesondere den rückwärtigen Verkehr, anzeigendes Bild an einer kraftfahrzeugseitigen Anzeigevorrichtung dargestellt. Mithin ist es möglich, die üblicherweise über einen kraftfahrzeugseitigen Rückspiegel einsehbare rückwärtige Verkehrssituation an einer kraftfahrzeugseitigen Anzeigevorrichtung darzustellen. Dieses Prinzip ist unter der Bezeichnung "digitaler Rückspiegel" bekannt.

Es kann sein, dass das von der oder den Bildaufnahmevorrichtungen aufgenommene Bild aufgrund der Ausrichtung und Positionierung der Bildaufnahmevorrichtung(en) allein das Fahrzeugumfeld und keinen Teil des Kraftfahrzeugs zeigt, so dass die Einschätzung der rückwärtigen Verkehrssituation schwierig sein kann. Diesem kann über eine andere Ausrichtung bzw. Positionierung entsprechender Bildaufnahmevorrichtungen nur bedingt zufrieden stellend begegnet werden, da derart neue Herausforderungen, insbesondere hinsichtlich des von den Bildaufnahmevorrichtungen abgedeckten, regelmäßig zu vergrößernden Sichtfelds, entstehen.

Eine Vergrößerung des Sichtfelds kann beispielsweise dazu führen, dass die anzeigevorrichtungsseitige Fläche zur Darstellung des Bildes vergrößert werden muss. Darüber hinaus ist der kraftfahrzeugseitig verfügbare Bauraum für eine Neuausrichtung bzw. Neupositionierung entsprechender Bildaufnahmevorrichtungen regelmäßig stark begrenzt.

US 2003/0108222 A1 offenbart ein Kraftfahrzeug gemäß dem Oberbegriff des Anspruchs 1 und ein Verfahren gemäß dem Oberbegriff des Anspruchs 7. Der Erfindung liegt das Problem zugrunde, ein demgegenüber verbessertes Kraftfahrzeug anzugeben.

Das Problem wird erfindungsgemäß durch ein Kraftfahrzeug mit den Merkmalen des Anspruchs 1 gelöst. Das erfindungsgemäße Prinzip schlägt vor, in eine Darstellung eines mittels einer oder mehreren kraftfahrzeugseitigen Bildaufnahmevorrichtungen aufgenommenen, das heckseitige Fahrzeugumfeld abbildenden Bildes zumindest teilweise eine Fahrzeugkarosseriedarstellung einzublenden. Das mittels der oder den Bildaufnahmevorrichtung(en) aufgenommene Bild wird typischerweise an einer Anzeige- oder Darstellungsfläche einer kraftfahrzeugseitigen Anzeigevorrichtung dargestellt. Die Anzeigevorrichtung ist mit einer ebenso kraftfahrzeugseitigen Steuereinrichtung verbunden, welche den Anzeigebetrieb der Anzeigevorrichtung, d. h. insbesondere auch die Ausgabe der an der Anzeigevorrichtung respektive der dieser zugehörigen Anzeige- oder Darstellungsfläche auszugebenden Bilder steuert.

Der oben wie auch im Weiteren verwendete Begriff Bild ist nicht als statisches Bild des heckseitigen Fahrzeugumfelds, sondern als eine sich ständig, d. h. mit einer bestimmten Regelmäßigkeit aktualisierende Folge von Bildern des heckseitigen Fahrzeugumfelds zu verstehen.

Der Erfindung liegt der Gedanke zugrunde, eine Darstellung eines entsprechenden Bildes, welches typischerweise aufgrund der Ausrichtung und Positionierung entsprechender kraftfahrzeugseitiger Bildaufnahmevorrichtungen keinen Teil der eigentlichen Fahrzeugkarosserie abbildet, derart künstlich zu modifizieren, dass in die Bilddarstellung eine Fahrzeugkarosseriedarstellung eingeblendet wird. Die Fahrzeugkarosseriedarstellung ist unabhängig von dem aufgenommenen Bild und somit künstlich erzeugt. Es handelt sich bei der Fahrzeugkarosseriedarstellung also nicht um eine in dem aufgenommenen Bild enthaltene Bildinformation, da das Bild, wie erwähnt, typischerweise keinen Teil des Kraftfahrzeugs bzw. der Fahrzeugkarosserie, sondern ausschließlich das heckseitige Fahrzeugumfeld, d. h. insbesondere den rückwärtigen Verkehr, abbildet. Die Fahrzeugkarosseriedarstellung ist sonach als Grafik zu verstehen, die erfindungsgemäß zusätzlich in die Darstellung des Bildes, dieses insbesondere überlagernd, eingeblendet wird. Die Erzeugung der Fahrzeugkarosseriedarstellung erfolgt typischerweise in der Steuereinrichtung. Zur Erzeugung der Fahrzeugkarosseriedarstellung ist sonach grundsätzlich keine Bildaufnahmevorrichtung erforderlich.

Durch die Einblendung einer Fahrzeugkarosseriedarstellung in die Bilddarstellung wird dem Fahrzeuginsassen, insbesondere dem Fahrer, die Möglichkeit einer besseren Abschätzung und Erkennung der Relativposition des sich in dem heckseitigen Fahrzeugumfeld befindlichen rückwärtigen Verkehrs gegeben.

Die erfindungsgemäße Lehre lässt sich prinzipiell auch auf mit wenigstens einer kraftfahrzeugseitigen Bildaufnahmevorrichtung aufgenommene Bilder, die nicht oder nicht allein das heckseitige Fahrzeugumfeld abbilden, übertragen. Derartige Bilder können beispielsweise das frontseitige und/oder das seitliche Fahrzeugumfeld abbilden. Es ist also grundsätzlich denkbar, auch in die Darstellung derartiger Bilder zumindest einen Teil einer unabhängig von dem oder den aufgenommenen Bildern erzeugten Fahrzeugkarosseriedarstellung einzublenden.

Da die eingeblendete Fahrzeugkarosseriedarstellung künstlich erzeugt ist, ist deren Gestaltung grundsätzlich frei wählbar. Es kann sich dabei z. B. um eine abstrahierte Abbildung einer Fahrzeugkarosserie handeln. Die Abstrahierung der Fahrzeugkarosserie kann soweit gehen, dass diese auf ein vergleichsweise einfaches geometrisches Element, wie einen Balken, ein Trapez etc., abstrahiert wird. Bei der eingeblendeten Fahrzeugkarosseriedarstellung kann es sich sonach um eine vergleichsweise einfache zweidimensionale Struktur handeln.

Selbstverständlich ist es auch denkbar, dass die Fahrzeugkarosseriedarstellung eine detailgetreue und insbesondere auch maßstabsgetreue Abbildung einer Fahrzeugkarosserie ist. Entsprechend kann die Fahrzeugkarosseriedarstellung beispielsweise auf Basis von Konstruktionsdaten des Kraftfahrzeugs, welche Konstruktionsdaten z. B. ein dreidimensionales Abbild des Kraftfahrzeugs beschreiben, erzeugt sein. Die in die Bilddarstellung eingeblendete Fahrzeugkarosseriedarstellung kann sonach den Eindruck erwecken, dass die kraftfahrzeugseitigen Bildaufnahmevorrichtungen derart ausgerichtet bzw. positioniert sind, dass diese auch einen Teil der Fahrzeugkarosserie aufnehmen. Insbesondere kann die eingeblendete Fahrzeugkarosseriedarstellung sonach auch dreidimensional sein.

Allgemein ist es also möglich, dass die eingeblendete Fahrzeugkarosseriedarstellung zumindest einem Teil der Fahrzeugkarosserie des Kraftfahrzeugs entspricht. Die Fahrzeugkarosseriedarstellung kann also eine grafische Nachbildung eines Teils der Fahrzeugkarosserie des Kraftfahrzeugs darstellen. Zweckmäßig beinhaltet die eingeblendete Fahrzeugkarosseriedarstellung dabei einen Teil des Fahrzeughecks. Die Fahrzeugkarosseriedarstellung kann demnach die Teile der Fahrzeugkarosserie (z. B. Heck, Hutablage, Fensterrahmen der Heckscheibe) beinhalten, die in einem konventionellen Rückspiegel zu sehen wären.

Grundsätzlich ist es jedoch auch denkbar, dass die eingeblendete Fahrzeugkarosseriedarstellung keinem Teil der Fahrzeugkarosserie des Kraftfahrzeugs, sondern einem Teil einer Fahrzeugkarosserie eines anderen Kraftfahrzeugs entspricht. Dies kann, insbesondere bei bestimmten mit einer Rückwärtsfahrt verbundenen Fahrmanövern den Vorteil haben, dass dem Fahrer eine im Vergleich zu der eigentlichen Fahrzeugkarosserie des von ihm bedienten Kraftfahrzeugs, insbesondere heckseitig, längere Fahrzeugkarosserie eingeblendet wird, so dass er sich bei der Beurteilung des Abstands zu einem hinter dem Kraftfahrzeug befindlichen Objekt und der darauf basierenden Rückwärtsfahrt sicherer ist, das Objekt nicht zu touchieren. Beispielsweise ist es also denkbar, bei einem Kraftfahrzeug mit Schrägheck in die Bilddarstellung als entsprechende Fahrzeugkarosseriedarstellung ein Stufenheck einzublenden, welches in Heckrichtung regelmäßig mehr Bauraum beansprucht. Erfindungmäßig ist die eingeblendete Fahrzeugkarosseriedarstellung bedienerseitig vorgegeben. So ist der Bediener, d. h. insbesondere der Fahrer, in der Art und Gestaltung der für die Fahrzeugkarosseriedarstellung zu verwendenden Grafik prinzipiell völlig frei. Mithin kann er sich die einzublendende Fahrzeugkarosseriedarstellung bedarfsgerecht und individuell konfigurieren. Die Konfiguration der Fahrzeugkarosseriedarstellung erfolgt beispielsweise über eine geeignete Schnittstelle der Steuereinrichtung.

Wie erwähnt, überlagert die in die Bilddarstellung eingeblendete Fahrzeugkarosseriedarstellung das dargestellte Bild teilweise. Die Überlagerung des dargestellten Bildes kann derart sein, dass bestimmte Bildinformationen des dargestellten Bildes vollkommen durch die Einblendung der Fahrzeugkarosseriedarstellung überdeckt werden. Die von der eingeblendeten Fahrzeugkarosseriedarstellung überlagerten Bildinformationen sind dann nicht mehr sichtbar bzw. erkennbar. Die Überlagerung des dargestellten Bildes kann jedoch auch derart sein, dass bestimmte Bildinformationen des dargestellten Bildes nur teilweise überdeckt werden. Die Einblendung der Fahrzeugkarosseriedarstellung kann sonach z. B. teiltransparent sein, so dass die von der eingeblendeten Fahrzeugkarosseriedarstellung überlagerten Bildinformationen weiterhin sichtbar bzw. erkennbar ist.

Um die eingeblendete Fahrzeugkarosseriedarstellung optisch gut erkennbar zu gestalten, ist die Fahrzeugkarosseriedarstellung von dem dargestellten Bild farbig hervorgehoben. Die optische Hervorhebung der Fahrzeugkarosseriedarstellung erfolgt also durch eine besondere farbige Gestaltung dieser. In Weiterbildung der Erfindung kann es vorgesehen sein, dass die Steuereinrichtung zusätzlich dazu eingerichtet ist, eine einen ermittelten Abstand zwischen einem Punkt der Fahrzeugkarosseriedarstellung und wenigstens einem rückwärtigen Verkehrsteilnehmer angebende Abstandsinformation einzublenden. Mithin wird dem Fahrer durch die Einblendung einer entsprechenden Abstandsinformation noch mehr Sicherheit im Hinblick auf die Einschätzung von im heckseitigen Fahrzeugumfeld befindlichen, sich dem Kraftfahrzeug insbesondere nähernden, Objekten gegeben. Die Abstandsinformation kann in Form von grafischen Elementen, wie z. B. Balken, Linien etc., oder alphanumerisch angezeigt sein. Die Ermittlung der Abstandsinformation erfolgt beispielsweise über eine kraftfahrzeugseitig vorhandene Abstandssensorik.

Die Erfindung betrifft ferner ein Verfahren mit den Merkmalen des Anspruchs 7. Mithin gelten zu dem erfindungsgemäßen Verfahren sämtliche Ausführungen bezüglich des erfindungsgemäßen Kraftfahrzeugs sowie dessen bevorzugter Ausführungsformen grundsätzlich analog. Das Verfahren wird typischerweise über eine kraftfahrzeugseitige, eine Anzeige- oder Darstellungsfläche aufweisende Anzeigevorrichtung und eine die Anzeigevorrichtung steuernde Steuereinrichtung realisiert.

Im Rahmen des erfindungsgemäßen Verfahrens ist es sonach z. B. möglich, dass die, insbesondere zwei- oder dreidimensional, eingeblendete Fahrzeugkarosseriedarstellung zumindest einem Teil der Fahrzeugkarosserie des Kraftfahrzeugs entspricht. Dabei ist es insbesondere möglich, dass als Fahrzeugkarosseriedarstellung ein Teil des Fahrzeughecks eingeblendet wird.

Insbesondere ist es auch denkbar, dass die eingeblendete Fahrzeugkarosseriedarstellung das Bild teilweise überlagert. Erfindungsmäßig ist die eingeblendete Fahrzeugkarosseriedarstellung von dem dargestellten Bild farbig hervorgehoben. Zweckmäßig kann zusätzlich eine einen ermittelten Abstand zwischen einem Punkt der Fahrzeugkarosseriedarstellung und wenigstens einem rückwärtigen Verkehrsteilnehmer angebende Abstandsinformation eingeblendet werden. Weitere Vorteile, Merkmale und Einzelheiten der Erfindung ergeben sich aus den im Folgenden beschriebenen Ausführungsbeispielen sowie anhand der Zeichnungen. Dabei zeigt:
- Fig. 1: eine Prinzipdarstellung eines Kraftfahrzeugs gemäß einem Ausführungsbeispiel der Erfindung;
- Fig. 2: eine Darstellung auf einer Anzeigefläche einer Anzeigevorrichtung ohne Einblendung einer Fahrzeugkarosseriedarstellung gemäß einem Ausführungsbeispiel der Erfindung; und
- Fig. 3, 4: jeweils eine Darstellung auf einer Anzeigefläche einer Anzeigevorrichtung mit Einblendung einer Fahrzeugkarosseriedarstellung gemäß einem Ausführungsbeispiel der Erfindung.

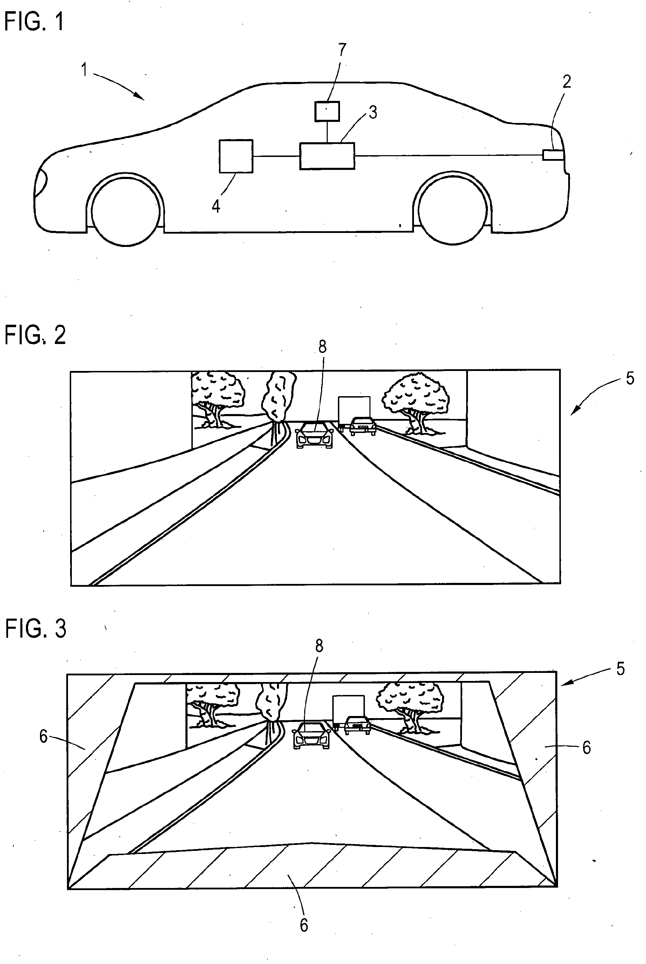

Fig. 1 zeigt eine Prinzipdarstellung eines Kraftfahrzeugs 1 gemäß einem Ausführungsbeispiel der Erfindung. Das Kraftfahrzeug 1 umfasst eine im Bereich des Hecks angeordnete Bildaufnahmevorrichtung 2, z. B. in Form einer Kamera. Die von der Bildaufnahmevorrichtung 2 aufgenommenen Bilder bzw. Bilddaten beinhalten das heckseitige Fahrzeugumfeld, so dass in diesen insbesondere der rückwärtige Verkehr bzw. die rückwärtige Verkehrssituation abgebildet ist.

Die Positionierung und Ausrichtung der Bildaufnahmevorrichtung 2 ist derart, dass die von dieser aufgenommenen Bilder keinen Teil des Kraftfahrzeugs 1 beinhalten. Das Kraftfahrzeug 1 ist demnach auf den von der Bildaufnahmevorrichtung 2 gelieferten Bildern nicht zu sehen (vgl. Fig. 2, die eine Darstellung 5 auf einer Anzeigefläche einer Anzeigevorrichtung 4 ohne Einblendung einer Fahrzeugkarosseriedarstellung 6 gemäß einem Ausführungsbeispiel der Erfindung zeigt).

Die Bildaufnahmevorrichtung 2 ist über eine Datenverbindung, wie z. B. einen Daten-Bus, mit einer Steuereinrichtung 3 verbunden. Die von der Bildaufnahmevorrichtung 2 aufgenommenen Bilder bzw. Bilddaten können so an die Steuereinrichtung 2 übermittelt und in dieser verarbeitet werden. Die Verarbeitung der Bilder beinhaltet insbesondere auch deren Darstellung an einer Anzeige- oder Darstellungsfläche einer Anzeigevorrichtung 4. Die Anzeigevorrichtung 4 umfasst sonach einen Bildschirm oder dergleichen. Die Bildaufnahmevorrichtung 2, die Steuereinrichtung 3 und die Anzeigevorrichtung 4 können gemeinsam als so genannter "digitaler Rückspiegel" erachtet werden.

Fig. 3 zeigt eine Darstellung 5 auf einer Anzeigefläche einer bzw. der in Fig. 1 gezeigten Anzeigevorrichtung 4 mit Einblendung einer Fahrzeugkarosseriedarstellung 6 gemäß einem Ausführungsbeispiel der Erfindung. Anhand von Fig. 3 lässt sich, insbesondere im Vergleich zu Fig. 2, erkennen, dass die Einblendung der Fahrzeugkarosseriedarstellung 6 eine verbesserte Bewertung und Einschätzung der rückwärtigen Verkehrssituation ermöglicht. Die bei konventionellen "digitalen Rückspiegeln" oftmals auftretenden Schwierigkeiten der Bewertung und Einschätzung der rückwärtigen Verkehrssituation sind damit behoben bzw. zumindest reduziert.

Ersichtlich handelt es sich bei der Fahrzeugkarosseriedarstellung 6 um eine künstlich erzeugte, zwei- oder dreidimensionale grafische Struktur, die einem Teil der Fahrzeugkarosserie des Kraftfahrzeugs 1, insbesondere einem Teil des Hecks des Kraftfahrzeugs 1, nachempfunden ist. Die Erstellung bzw. Erzeugung der eingeblendeten Fahrzeugkarosseriedarstellung 6 kann beispielsweise auf Basis von in der Steuereinrichtung 2 hinterlegten Konstruktionsdaten des Kraftfahrzeugs 1 erfolgen.

Die Art und Gestaltung sowie insbesondere auch die noch zu nennende optische Hervorhebung der Fahrzeugkarosseriedarstellung 6 kann werksseitig oder bedienerseitig, d. h. insbesondere fahrerseitig, vorgegeben sein. Insbesondere ist es möglich, dass sich der Fahrer die einzublendende Fahrzeugkarosseriedarstellung 6 bedarfsgereicht und individuell konfiguriert. So sind z. B. Größe, Form und bestimmte Elemente der einzublendenden Fahrzeugkarosseriedarstellung 6 bedarfsgerecht und individuell an die Vorgaben eines Fahrers anpassbar.

In Fig. 3 ist erkennbar, dass durch die die eigentliche Darstellung 5 überlagernde Einblendung der Fahrzeugkarosseriedarstellung 6 ein bestimmter Teil der eigentlichen Darstellung 5 überdeckt ist. Der durch die eingeblendete Fahrzeugkarosseriedarstellung 6 vermittelte Eindruck gleicht dem Blick in einen konventionellen Rückspiegel.

Wesentlich ist, dass die in die Darstellung 5 des von der Bildaufnahmevorrichtung 2 gelieferten Bildes der rückwärtigen Verkehrssituation eingeblendete Fahrzeugkarosseriedarstellung 6 unabhängig von den tatsächlich von der Bildaufnahmevorrichtung 2 aufgenommenen Bildern bzw. Bilddaten ist. Bei der Fahrzeugkarosseriedarstellung 6 handelt es sich demnach um ein in der Steuereinrichtung 3 rein künstlich erzeugtes grafisches Element.

Die Einblendung der Fahrzeugkarosseriedarstellung 6 wird farbig hervorgehoben. Selbstverständlich ist in diesem Zusammenhang darauf zu achten, dass die Fahrzeuginsassen, insbesondere der Fahrer, durch die farbige Hervorhebung der Fahrzeugkarosseriedarstellung 6 nicht abgelenkt oder gestört werden.

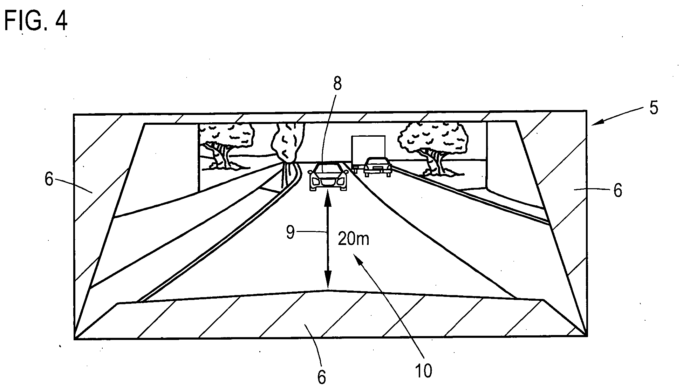

Fig. 4 zeigt eine Darstellung 5 auf einer Anzeigefläche einer Anzeigevorrichtung 4 mit Einblendung einer Fahrzeugkarosseriedarstellung 6 gemäß einem weiteren Ausführungsbeispiel der Erfindung. Im Unterschied zu Fig. 3 ist hier zusätzlich eine einen mittels einer Abstandssensorik 7 erfassten Abstand zwischen einem Punkt der Fahrzeugkarosseriedarstellung 6 und wenigstens einem rückwärtigen Verkehrsteilnehmer 8 angebende Abstandsinformation eingeblendet. Die Abstandssensorik kommuniziert mit der Steuereinrichtung 3. Die Steuereinrichtung 3 erzeugt die Abstandsinformation auf Basis des mit der Abstandssensorik 7 ermittelten Abstands zwischen einem bestimmten Punkt der Fahrzeugkarosseriedarstellung 6, das heißt insbesondere einem dem Verkehrsteilnehmer am nahesten liegenden Punkt der Fahrzeugkarosseriedarstellung 6, und dem Verkehrsteilnehmer 8. Die Abstandsinformation 8 wird zusätzlich zu der Fahrzeugkarosseriedarstellung 6 in die Darstellung 5 eingeblendet. Ersichtlich kann es sich bei der eingeblendeten Abstandsinformation um ein graphisches Element in Form einer Linie 9 oder eine alphanumerischen Anzeige 10, die den konkret ermittelten Abstandswert angibt, handeln.

## Patentansprüche

1. Kraftfahrzeug (1), umfassend eine Anzeigevorrichtung (4) zur Darstellung eines mit wenigstens einer kraftfahrzeugseitigen Bildaufnahmevorrichtung (2) aufgenommenen, das heckseitige Fahrzeugumfeld abbildenden Bildes sowie eine die Anzeigevorrichtung (4) steuernde Steuereinrichtung (3), wobei die Bildaufnahmevorrichtung (2) derart angeordnet und positioniert ist, dass das Bild keinen Teil der eigentlichen Fahrzeugkarosserie abbildet, wobei die Steuereinrichtung (3) dazu eingerichtet ist, in der Darstellung (5) des Bildes zusätzlich zumindest einen Teil einer unabhängig von dem aufgenommenen Bild erzeugten Fahrzeugkarosseriedarstellung (6) einzublenden,
**dadurch gekennzeichnet,**
**dass** die einzublendende Fahrzeugkarosseriedarstellung (6) bedienerseitig hinsichtlich ihrer Größe und/oder ihrer Form und/oder bestimmter Elemente der einzublendenden Fahrzeugkarosseriedarstellung (6) anpassbar ist, wobei die eingeblendete Fahrzeugkarosseriedarstellung (6) von dem dargestellten Bild farbig hervorgehoben ist.

2. Kraftfahrzeug nach einem der vorangehenden Ansprüche,
**dadurch gekennzeichnet,**
**dass** die eingeblendete Fahrzeugkarosseriedarstellung (6) zumindest einem Teil der Fahrzeugkarosserie des Kraftfahrzeugs (1) entspricht.

3. Kraftfahrzeug nach Anspruch 2,
**dadurch gekennzeichnet,**
**dass** die eingeblendete Fahrzeugkarosseriedarstellung (6) ein Teil des Fahrzeughecks ist.

4. Kraftfahrzeug nach einem der vorangehenden Ansprüche,
**dadurch gekennzeichnet,**
**dass** die eingeblendete Fahrzeugkarosseriedarstellung (6) das Bild teilweise überlagert.

5. Kraftfahrzeug nach einem der vorangehenden Ansprüche,
**dadurch gekennzeichnet,**
**dass** die eingeblendete Fahrzeugkarosseriedarstellung (6) zwei- oder dreidimensional ist.

6. Kraftfahrzeug nach einem der vorangehenden Ansprüche,
**dadurch gekennzeichnet,**
**dass** die Steuereinrichtung (3) dazu eingerichtet ist, eine einen ermittelten Abstand zwischen einem Punkt der Fahrzeugkarosseriedarstellung (6) und wenigstens einem rückwärtigen Verkehrsteilnehmer (8) angebende Abstandsinformation einzublenden.

7. Verfahren zur Darstellung eines mit wenigstens einer kraftfahrzeugseitigen Bildaufnahmevorrichtung (2) aufgenommenen, das heckseitige Fahrzeugumfeld abbildenden Bildes, wobei eine Bildaufnahmevorrichtung (2) verwendet wird, welche derart angeordnet und positioniert ist, dass das Bild keinen Teil der eigentlichen Fahrzeugkarosserie abbildet, wobei in der Darstellung (5) des Bildes zumindest ein Teil einer unabhängig von dem aufgenommenen Bild erzeugten Fahrzeugkarosseriedarstellung (6) eingeblendet wird
**dadurch gekennzeichnet,**
**dass** die einzublendende Fahrzeugkarosseriedarstellung (6) bedienseitig hinsichtlich ihrer Größe und/oder Form und/oder bestimmter Elemente der einzublendenden Fahrzeugkarossieredarstellung (6) angepasst wird, wobei die eingeblendete Fahrzeugkarosseriedarstellung (6) von dem dargestellten Bild farbig hervorgehoben wird.

8. Verfahren nach Anspruch 7,
**dadurch gekennzeichnet,**
**dass** die eingeblendete Fahrzeugkarosseriedarstellung (6) zumindest einem Teil der Fahrzeugkarosserie des Kraftfahrzeugs (1) entspricht.

9. Verfahren nach Anspruch 7 oder 8,
**dadurch gekennzeichnet,**
**dass** als Fahrzeugkarosseriedarstellung (6) ein Teil des Fahrzeughecks eingeblendet wird.

10. Verfahren nach einem der Ansprüche 7 bis 9,
**dadurch gekennzeichnet,**
**dass** die eingeblendete Fahrzeugkarosseriedarstellung (6) das Bild teilweise überlagert.

11. Verfahren nach einem der Ansprüche 7 bis 10,
**dadurch gekennzeichnet,**
**dass** die Fahrzeugkarosseriedarstellung (6) zwei- oder dreidimensional eingeblendet wird.

12. Verfahren nach einem der Ansprüche 7 bis 11,
**dadurch gekennzeichnet,**
**dass** zusätzlich eine einen ermittelten Abstand zwischen einem Punkt der Fahrzeugkarosseriedarstellung (6) und wenigstens einem rückwärtigen Verkehrsteilnehmer (8) angebende Abstandsinformation eingeblendet wird.

## Claims

1. Motor vehicle (1), comprising a display device (4) for depicting an image captured with at least one image capturing device (2) onboard the motor vehicle and depicting the rear-side vehicle surrounding environment as well as a control device (3) controlling the display device (4), wherein the image capturing device (2) is arranged and positioned in such a way that the image does not depict a part of the actual vehicle body, wherein the control device (3) is configured to additionally overlay at least one part of a vehicle body depiction (6) generated independently from the captured image in the depiction (5) of the image,
**characterised in that**
the vehicle body depiction (6) to be overlaid is able to be adapted by the operator with regard to its size and/or its shape and/or determined elements of the vehicle body depiction (6) to be overlaid, wherein the overlaid vehicle body depiction (6) is distinguished from the depicted image by colour.

2. Motor vehicle according to any one of the preceding claims,
**characterised in that**
the overlaid vehicle body depiction (6) corresponds to at least one part of the vehicle body of the motor vehicle (1).

3. Motor vehicle according to claim 2,
**characterised in that**
the overlaid vehicle body depiction (6) is a part of the vehicle rear.

4. Motor vehicle according to any one of the preceding claims,
**characterised in that**
the overlaid vehicle body depiction (6) partially superimposes the image.

5. Motor vehicle according to any one of the preceding claims,
**characterised in that**
the overlaid vehicle body depiction (6) is two- or three-dimensional.

6. Motor vehicle according to any one of the preceding claims,
**characterised in that**
the control device (3) is configured to overlay a distance information indicating a determined distance between a point of the vehicle body depiction (6) and at least one rearward road user (8).

7. Method for depicting an image captured with at least one image capturing device (2) onboard the motor vehicle and depicting the rear-side vehicle surrounding environment, wherein an image capturing device (2) is used which is arranged and positioned in such a way that the image does not depict a part of the actual vehicle body, wherein at least one part of a vehicle body depiction (6) generated independently from the captured image is overlaid in the depiction (5) of the image,
**characterised in that**
the vehicle body depiction (6) to be overlaid is able to be adapted by the operator with regard to its size and/or shape and/or determined elements of the vehicle body depiction (6) to be overlaid, wherein the overlaid vehicle body depiction (6) is distinguished from the depicted image by colour.

8. Method according to claim 7,
**characterised in that**
the overlaid vehicle body depiction (6) corresponds to at least one part of the vehicle body of the motor vehicle (1).

9. Method according to claim 7 or 8,
**characterised in that**
a part of the vehicle rear is overlaid as a vehicle body depiction (6).

10. Method according to any one of claims 7 to 9,
**characterised in that**
the overlaid vehicle body depiction (6) partially superimposes the image.

11. Method according to any one of claims 7 to 10,
**characterised in that**
the vehicle body depiction (6) is overlaid two- or three-dimensionally.

12. Method according to any one of claims 7 to 11,
**characterised in that**
additionally a distance information indicating a determined distance between a point of the vehicle body depiction (6) and at least one rearward road user (8) is overlaid.

## Revendications

1. Véhicule automobile (1), comprenant un dispositif d'affichage (4) destiné à représenter au moins une image qui a été enregistrée avec au moins une caméra (2) située côté véhicule et qui reproduit l'environnement arrière du véhicule ainsi qu'un dispositif de commande (3) commandant le dispositif d'affichage (4), dans lequel la caméra (2) est agencée et positionnée de telle sorte que l'image ne reproduit aucune partie de la carrosserie de véhicule considérée, dans lequel le dispositif de commande (3) est conçu pour insérer en plus dans la représentation (5) de l'image au moins une partie d'une représentation de carrosserie de véhicule (6) produite indépendamment de l'image enregistrée,
**caractérisé en ce que** la représentation de carrosserie de véhicule (6) à insérer peut être adaptée par l'utilisateur quant à sa dimension et/ou à sa forme et/ou à certains éléments de la représentation de carrosserie de véhicule (6) à insérer, ladite représentation de carrosserie de véhicule (6) insérée étant accentuée de manière colorée par rapport à l'image représentée.

2. Véhicule automobile selon l'une quelconque des revendications précédentes, **caractérisé en ce que** la représentation de carrosserie de véhicule (6) insérée correspond à au moins une partie de la carrosserie de véhicule du véhicule automobile (1).

3. Véhicule automobile selon la revendication 2, **caractérisé en ce que** la représentation de carrosserie de véhicule (6) insérée est une partie de l'arrière de véhicule.

4. Véhicule automobile selon l'une quelconque des revendications précédentes, **caractérisé en ce que** la représentation de carrosserie de véhicule (6) insérée est partiellement superposée à l'image.

5. Véhicule automobile selon l'une quelconque des revendications précédentes, **caractérisé en ce que** la représentation de carrosserie de véhicule (6) insérée est bidimensionnelle ou tridimensionnelle.

6. Véhicule automobile selon l'une quelconque des revendications précédentes, **caractérisé en ce que** le dispositif de commande (3) est conçu pour insérer une information de distance qui indique une distance déterminée entre un point de la représentation de carrosserie de véhicule (6) et au moins un usager de la route (8) derrière.

7. Procédé de représentation d'une image qui a été enregistrée avec au moins une caméra (2) située côté véhicule et qui reproduit l'environnement arrière du véhicule, dans lequel on utilise une caméra (2) qui est agencée et positionnée de telle sorte que l'image ne reproduit aucune partie de la carrosserie de véhicule considérée, dans lequel on insère dans la représentation (5) de l'image au moins une partie d'une représentation de carrosserie de véhicule (6) produite indépendamment de l'image enregistrée,
**caractérisé en ce que** la représentation de carrosserie de véhicule (6) à insérer est adaptée par l'utilisateur quant à sa dimension et/ou à sa forme et/ou à certains éléments de la représentation de carrosserie de véhicule (6) à insérer, ladite représentation de carrosserie de véhicule (6) insérée étant accentuée de manière colorée par rapport à l'image représentée.

8. Procédé selon la revendication 7, **caractérisé en ce que** la représentation de carrosserie de véhicule (6) insérée correspond à au moins une partie de la carrosserie de véhicule du véhicule automobile (1).

9. Procédé selon la revendication 7 ou 8, **caractérisé en ce qu'**une partie de l'arrière de véhicule est insérée comme représentation de carrosserie de véhicule (6).

10. Procédé selon l'une quelconque des revendications 7 à 9, **caractérisé en ce que** la représentation de carrosserie de véhicule (6) insérée est partiellement superposée à l'image.

11. Procédé selon l'une quelconque des revendications 7 à 10, **caractérisé en ce que** la représentation de carrosserie de véhicule (6) est insérée de manière bidimensionnelle ou tridimensionnelle.

12. Procédé selon l'une quelconque des revendications 7 à 11, **caractérisé en ce qu'**on insère en plus une information de distance qui indique une distance déterminée entre un point de la représentation de carrosserie de véhicule (6) et au moins un usager de la route (8) derrière.
